# EUROPÄISCHE PATENTSCHRIFT

(11) **EP 0 818 359 B1**
(45) Veröffentlichungstag und Bekanntmachung des Hinweises auf die Patenterteilung: **04.04.2001**
(21) Anmeldenummer: 97110861.8
(22) Anmeldetag: 01.07.1997
(51) Int. Cl.: B60R 21/20

(54) **Airbagmodul-Abdeckung**
Airbag module cover
Couvercle pour module de coussin gonflable

(30) Priorität: 01.07.1996 DE 19626416
(43) Veröffentlichungstag der Anmeldung: 14.01.1998
(73) Patentinhaber: TAKATA (EUROPE) VEHICLE SAFETY TECHNOLOGY GmbH, D-89081 Ulm (DE)
(72) Erfinder: Klingauf, Gerhard, 89186 Illerrieden (DE)
(74) Vertreter: Schmidt, Christian

(56) Entgegenhaltungen:
- EP-A- 0 564 974
- GB-A- 2 263 887
- GB-A- 2 265 340
- GB-A- 2 270 884
- PATENT ABSTRACTS OF JAPAN vol. 096, no. 003, 29.März 1996 & JP 07 291078 A (INOAC CORP), 7.November 1995,

## Beschreibung

Die Erfindung betrifft eine Airbagmodul-Abdeckkappe nach dem Oberbegriff des Patentanspruchs 1.

Bei bekannten Airbagmodul-Abdeckkappen dieser Art greift das die zur Herstellung der Perforation erforderlichen Perforationsvorsprünge aufweisende Werkzeug von der Innenseite her an der Deckwand an, so daß die Perforationen mit der Außenwand bündig sind, auf die anschließend der in erster Linie dekorativen Zwecken dienende Kunststoffüberzug aufgebracht wird. Hierbei kommt es zu einem Durchdrücken des Perforationsmusters bis zur Außenfläche des Kunststoffüberzuges, was es erforderlich macht, die Außenfläche des Kunststoffüberzuges mit solchen dekorativen Mustern zu versehen, daß die Durchdrückungen der Perforationen nicht unangenehm in Erscheinung treten.

Der Erfindung liegt die Aufgabe zugrunde, eine Airbagmodul-Abdeckkappe der eingangs genannten Gattung zu schaffen, bei der die Außenfläche des Kunststoffüberzuges nicht von der Form und Ausbildung der Perforation beeinträchtigt wird.

Zur Lösung dieser Aufgabe sind die Merkmale des kennzeichnenden Anteile des Anspruches 1 vorgesehen. Hergestellt wird eine derartige Airbagmodul-Abdeckkappe bevorzugt gemäß dem Verfahren nach Anspruch 18.

Der Erfindungsgedanke ist also darin zu sehen, daß das die Perforation herstellende Werkzeug von der Außenfläche der Deckwand her angreift, wodurch die Perforationen in deutlichem Abstand von der Außenfläche der Deckwand am Grunde der bei der Herstellung ebenfalls miteingeformten Nuten entstehen. Wird auf eine derart vorgefertigte Deckwand anschließend der vorzugsweise weich ausgebildete dekorative Kunststoffüberzug aufgebracht, so befinden sich die Perforationen in einem derart deutlichen Abstand unterhalb der Außenfläche des Kunststoffüberzuges, daß ein Durchdrücken der Perforationen an die Außenfläche weitgehend ausgeschlossen ist. Der Erfindungsgedanke läßt sich auch so ausdrücken, daß die normalerweise an die Außenfläche der Deckwand angrenzenden Perforationen durch die erfindungsgemäßen Maßnahmen an die Innenfläche und somit in einen deutlich größeren Abstand vom Kunststoffüberzug verlegt werden.

Vorteilhafte Weiterbildungen der Erfindung sind durch die Ansprüche 2 bis 17 gekennzeichnet.

Ein bevorzugtes Verfahren zur Herstellung einer erfindungsgemäßen Airbagmodul-Abdeckkappe entnimmt man den Ansprüchen 18 und 19.

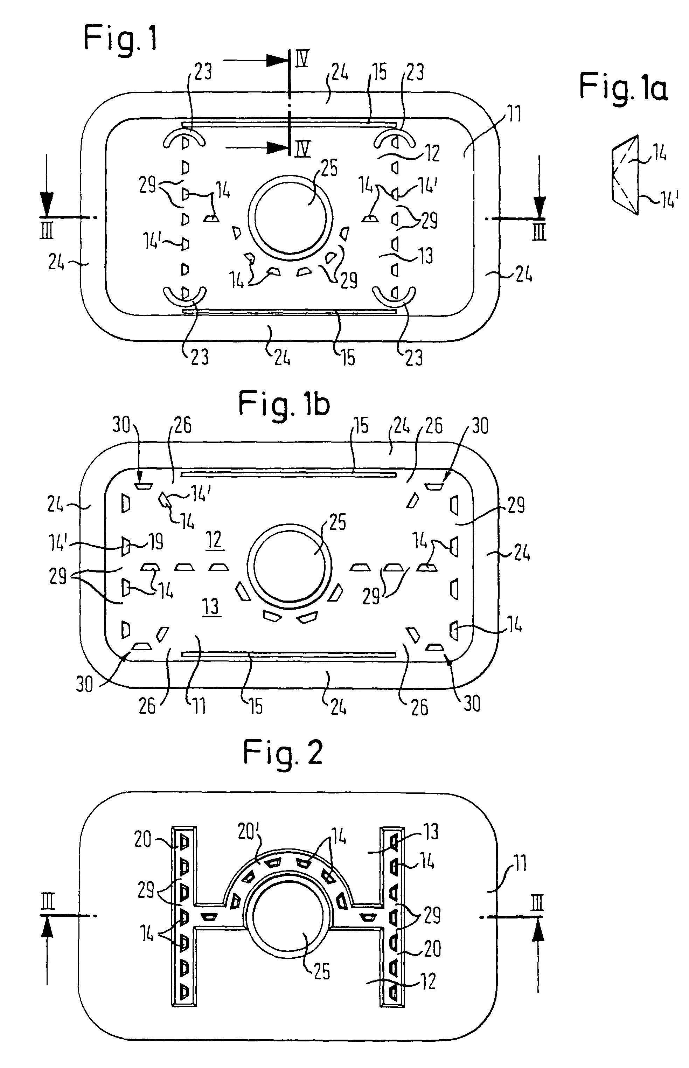

Die Erfindung wird im folgenden beispielsweise anhand der Zeichnung beschrieben; in dieser zeigt
- Figur 1: eine schematische Ansicht einer erfindungsgemäßen Airbagmodul-Abdeckkappe von der Innenseite her auf die Deckwand,
- Figur 1 a: eine vergrößerte Draufsicht auf eine der Perforationen,
- Figur 1 b: eine Ansicht analog Figur 1 einer weiteren Ausführungsform,
- Figur 2: eine Ansicht des Gegenstandes der Figur 1 von der entgegengesetzte Seite her bei noch nicht aufgebrachtem Kunststoffüberzug,
- Figur 3: einen Schnitt nach den Linien III-III in Figur 1 bzw. Figur 2,

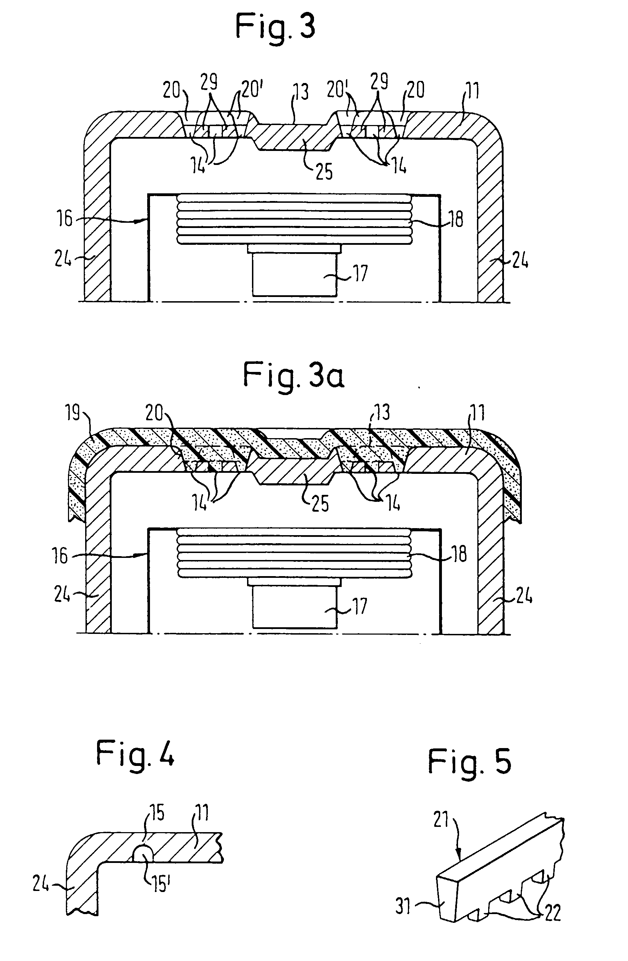

- Figur 3 a: einen Schnitt analog Figur 3 nach Aufbringung des Kunststoffüberzuges
- Figur 4: einen vergrößerten Schnitt nach Linie IV-IV in Figur 1 bzw. 1 b,
- Figur 5: eine schematische perspektivische Ansicht eines Ausschnittes eines erfindungsgemäß von der Außenfläche der Deckwand her angreifenden Werkzeuges und

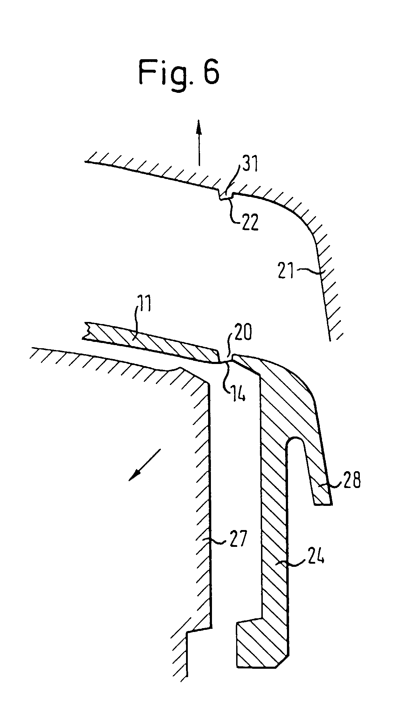

- Figur 6: eine vergrößerte Teilschnittansicht einer erfindungsgemäßen Airbagmodul-Abdeckkappe während der Herstellung mittels eines Außen- und eines Innenwerkzeuges.

Nach den Figuren 1 bis 3 weist eine erfindungsgemäße Airbagmodul-Abdeckkappe zusammen eine Umfangswand bildende Seitenwänden 24 auf, die oben in eine im wesentlichen rechteckförmige Deckwand 11 übergehen. Die Seitenwände 24 und die damit einstückige Deckwand 11 bilden einen umgekehrt topfartigen Grundkörper aus relativ hartem Kunststoff. Die längeren Seiten der Deckwand 11 und dort anschließenden Seitenwände 24 können auch leicht gekrümmt sein, während die beiden kürzeren Seiten und die dortigen Seitenwände 24 nicht unbedingt parallel zueinander verlaufen müssen, sondern auch einen kleinen Winkel miteinander einschließen können.

Parallel zu den beiden längeren Seiten der in Figur 1 und 1 b gezeigten Deckwand 11 ist in dieser an gegenüberliegenden Randbereichen jeweils ein geradliniges Scharnier 15 dadurch gebildet, daß an diesen Stellen gemäß Figur 4 das Material durch Vorsehen einer linienförmigen Ausnehmung 15' verdünnt ist. Die nutenartige Ausnehmung 15' befindet sich an der Innenseite der Deckwand 11.

Auf der in Figur 2 gezeigten Außenseite der Ausführungsform der Deckwand 11 nach Figur 1 sind Nuten 20 eingeformt, die sich von Orten, in deren Nähe auf der entgegengesetzten Seite der Deckwand 11 die Scharniere 15 enden, senkrecht zu den Scharnieren 15 quer über die Deckwand 11 erstrecken. Außer diesen zwei, nach den Figuren 1 und 2 geradlinigen Nuten 20 verläuft etwa von den Mitten der beiden seitlichen Nuten 20 eine dritte Verbindungs-Nut 20', die im Anschluß an die seitlichen Nuten 20 zunächst einen geradlinigen Verlauf nimmt und dann im wesentlichen teilkreisförmig um eine kreisförmige Vertiefung 25 herum geführt ist, die beispielsweise für die Aufnahme des Emblems einer Automobilfirma dient.

Am Grunde der Nuten 20, 20' sind sich bis zur Innenfläche der Deckwand 11 erstreckende Perforationen 14 vorgesehen. Die Nuten 20, 20' und die Perforationen 14 grenzen innerhalb der Deckwand 11 zwei Klappen 12, 13 ab, die bei Zündung des Generators 17 eines im Innern des Grundkörpers 11, 24 vorgesehenen Airbagmoduls 16 und die dadurch hervorgerufene Aufblähung eines Gassackes 18 unter Aufreißen der Stege 29 zwischen den Perforationen 14 um die Scharniere 15 nach außen aufgeklappt werden, so daß der Gassack 18 aus der dadurch geschaffenen Öffnung in der Deckwand 11 austreten und sich zum Schutz des Insassen aufblähen kann.

Nach Figur 1 a weisen die Perforationen 14 einen trapezförmigen oder dreieckförmigen (gestrichelt angedeuteten) Umriß auf, wobei die längere Seite 14' bzw. die Grundseite des dreiecksförmigen Umrisses sich jeweils auf der Außenseite der Klappen 12, 13 befindet. Der Abstand der Perforationen 14 ist so, daß beim Durchreißen der Stege 29 eine die langen Seiten 14' zumindest im wesentlichen fortsetzende gerade Rißlinie entsteht, an der keine scharfen Vorsprünge oder Unregelmäßigkeiten vorliegen, die den dort auch anliegenden aufgeblähten Gassack 18 beschädigen oder zerstören könnten.

Nach den Figuren 1 bis 3 weisen die Nuten 20, 20' nach unten aufeinander zu laufende schräge Flanken auf, die sich in den Perforationen 14 fortsetzen.

Um beim Aufreißen der Stege 29 zwischen den Perforationen 14 ein Weiterreißen in die Scharniere 15 hinein zu vermeiden, ist nach Figur 1 zwischen den Enden der Scharniere 15 und der anschließenden ersten Perforation 14 eine Materialanhäufung 23 vorgesehen, welche so stark ausgebildet und geformt ist, daß ein sich entlang der Perforationen 14 ausbildender Riß an den Materialanhäufungen 23 gestoppt wird und sich nicht bis zu den Enden der Scharniere 15 ausbreiten kann.

Figur 1 b zeigt eine andere vorteilhafte Möglichkeit, ein Übergreifen eines sich ausbildenden Risses in die Scharniere 15 zu vermeiden. Die seitlichen Nuten 20 mit den Perforationen 14 sind hier weiter nach außen zu den kurzen Seiten der Deckwand 11 hin verlegt. Die Anordnung der Perforationen 14 mit den zugeordneten seitlichen Nuten 20 ist ähnlich wie beim Ausführungsbeispiel nach Figur 1 über den größten Teil der Länge wieder geradlinig. An den Enden weisen die Nuten 20 und die Reihe der Perforationen 14 gemäß Figur 1 b jedoch nach innen gerichtete konvexe Krümmungsbereiche 30 auf, welche im einzelnen so ausgebildet sind, daß ein oder mehrere der am Ende einer Nut 20 vorgesehenen Perforationen 14 mit ihren langen Seiten 14' einen deutlichen Winkel von vorzugsweise über 30° relativ zur Längsachse der Scharniere 15 aufweisen und zwischen diesen End-Perforationen 14 und den Enden der Scharniere 15 ein deutlicher Abstand 26 verbleibt.

Aufgrund dieser Maßnahme besteht ebenfalls keine Gefahr, daß ein durch Aufreißen der Stege 29 entstehender Riß sich in die Scharniere 15 fortsetzt.

Nach Figur 3 a ist die Außenfläche der Deckwand 11 mit einem weichen Kunststoffüberzug 19 versehen, dessen Material in die Nuten 20, 20' und die Perforationen 14 eindringt, um eine einwandfreie Verankerung in der Deckwand 11 zu gewährleisten.

Die Herstellung des Grundkörpers 11, 24 der erfindungsgemäßen Abdeckkappe kann beispielsweise mittels eines in Figur 5 und 6 angedeuteten Außenwerkzeuges 21 erfolgen, welches der Form der Nuten 20, 20' entsprechende Rippen 31 aufweist, die die zur Herstellung der Perforationen 14 erforderlichen Perforationsvorsprünge 22 tragen. Das Außenwerkzeug 21 greift gemäß Fig. 6 von der Außenfläche der Deckwand 11 an, während ein Innenwerkzeug 27 den inneren Gegenhalt bietet. In Figur 6 sind die beiden Werkzeuge 21, 27 im bereits vom Grundkörper 11, 24 etwas entfernten Zustand dargestellt. Die Perforationen 14 sind also an die Innenseite der Deckwand 11 verlegt, wo sie - wie man in Figur 3 a erkennt - einen erheblichen Abstand von der Außenfläche des Kunststoffüberzuges 19 aufweisen und sich demnach nicht nach außen durchdrücken können. Die äußeren Ränder der Nuten 20, 20' sollen zum gleichen Zweck etwas abgerundet sein. Nach Figur 6 können an den Seitenwänden 24 auch noch schräg nach unten vorstehende Fortsätze 28 vorgesehen sein, die beispielsweise Befestigungszwecken dienen.

Herstellung und die Funktion der beschriebenen Airbagmodul-Abdeckkappe sind wie folgt:

Zunächst werden die beiden Werkzeuge 21, 27 im erforderlichen Abstand zueinander angeordnet, worauf der Kunststoff zur Bildung des Grundkörpers 11, 24 eingespritzt wird. Anschließend werden die beiden Formhälften 21, 27 in der in Figur 6 durch Pfeile angedeuteten Weise vom fertiggestellten Grundkörper 11, 24 entfernt. Anschließend wird dann mittels einer weiteren und nicht dargestellten Form der Kunststoffüberzug 19 nach Figur 3 a aufgebracht.

Beim Zünden des Generators 17 bläht sich der Gassack 18 auf und drückt von innen gegen die Klappen 11, 12, wodurch die Stege 29 zwischen den Perforationen 14 aufgerissen werden und die beiden Klappen um die Scharniere 15 nach außen schwenken können. Hierdurch kann der Gassack 18 aus der dadurch gebildeten Öffnung austreten und sich zum Insassen hin in der erwünschten Weise aufblähen.

Aufgrund der erfindungsgemäßen Gestaltung entstehen beim Aufreißen glatte und nicht scharfe Rißkanten, wodurch keine Gefahr besteht, daß der sich aufblähende und gegen die Rißkanten drückende Gassack 18 beschädigt oder zerstört wird.

Der Kunststoffüberzug 19 darf nur eine solche Festigkeit und Dicke aufweisen, daß er das Aufklappen der Klappen 12, 13 im Falle einer Zündung des Generators 17 nicht behindert.

In der Zeichnung sind die einzelnen Perforationen 14 der Übersichtlichkeit halber in einem etwas größeren Abstand voneinander dargestellt, als dies tatsächlich der Fall sein sollte. Mit anderen Worten sind die Stege 29 zwischen den Perforationen 14 so kurz zu wählen, daß im Falle der Aufblähung des Gassackes 18 ein linienförmiges, problemloses Aufreißen der Deckwand 11 entlang der Perforationen 14 und Stege 29 erfolgt.

### Bezugszeichenliste

- 11: Deckwand
- 12: Klappe
- 13: Klappe
- 14: Perforation
- 14': Seite
- 15: Scharnier
- 15': Ausnehmung
- 16: Airbagmodul
- 17: Generator
- 18: Gassack
- 19: Kunststoffüberzug
- 20: seitliche Nut
- 20': Verbindungs-Nut
- 21: Außenwerkzeug
- 22: Perforationsvorsprünge
- 23: Materialanhäufung
- 24: Seitenwände
- 25: Vertiefung
- 26: Abstand
- 27: Innenwerkzeug
- 28: Fortsatz
- 29: Stege
- 30: Krümmungsbereich
- 31: Rippen

## Patentansprüche

1. Airbagmodul-Abdeckkappe mit Seitenwänden (24) und einer Deckwand (11), in der wenigstens eine Klappe (12, 13) vorgesehen ist, die mittels linienförmig ausgebildeter Perforationen (14) von dem Rest der Deckwand (11) oder einer anderen Klappe (13, 12) abgegrenzt ist und bei Zündung des Generators (17) des Airbagmoduls (16) und dadurch bedingtem Aufreißen der Perforationen (14) um ein vorzugsweise durch Materialverdünnung gebildetes Scharnier (15) nach außen aufschwenkbar ist, um den Gassack (18) des Airbagmoduls (16) nach außen treten zu lassen, wobei die Deckwand (11) und bevorzugt auch die Seitenwände (24) mit einem vorzugsweise dekorativen Zwecken dienenden Kunststoffüberzug (19) versehen ist, der bevorzugt aus einem etwas weicheren Material als die Seitenwände (24) und die Deckwand (11) besteht,
dadurch gekennzeichnet,
daß die Perforationen (14) sich am Grund von auf der Außenseite der Deckwand (11) vorgesehenen durchgehenden Nuten (20, 20') befindet, die sich parallel zu und in Ausrichtung mit den Perforationen (14) erstrecken und welche zumindest weitgehend mit dem Material des Kunststoffüberzuges (19) ausgefüllt sind.

2. Airbagmodul-Abdeckkappe nach Anspruch 1,
dadurch gekennzeichnet,
daß die Nuten (20, 20') sich zu den Perforationen (14) hin verjüngen und diese Verjüngung sich vorzugsweise in den Perforationen (14) fortsetzt.

3. Airbagmodul-Abdeckkappe nach Anspruch 2,
dadurch gekennzeichnet,
daß der Verjüngungswinkel 5 bis 15° und insbesondere etwa 10° beträgt.

4. Airbagmodul-Abdeckkappe nach einem der vorhergehenden Ansprüche,
dadurch gekennzeichnet,
daß die Tiefe der Nuten (20, 20') größer ist als die Tiefe der Perforationen (14).

5. Airbagmodul-Abeckkappe nach einem der vorhergehenden Ansprüche,
dadurch gekennzeichnet,
daß die Tiefe der Perforationen (14) 0,4 bis 0,8 mm, insbesondere etwa 0,6 mm beträgt.

6. Airbagmodul-Abdeckkappe nach einem der vorhergehenden Ansprüche,
dadurch gekennzeichnet,
daß die Tiefe der Nuten (20, 20') 1 bis 3 mm und insbesondere etwa 2 mm beträgt.

7. Airbagmodul-Abdeckkappe nach einem der vorhergehenden Ansprüche,
dadurch gekennzeichnet,
daß die Tiefe der Nuten (20, 20') das zwei- bis zehnfache, und insbesondere etwa das fünffache der Tiefe der Perforationen (14) beträgt.

8. Airbagmodul-Abdeckkappe nach einem der vorhergehenden Ansprüche,
dadurch gekennzeichnet,
daß die Breite der Nuten (20, 20') oben 1 bis 2 mm, insbesondere etwa 1,5 mm beträgt.

9. Airbagmodul-Abdeckkappe nach einem der vorhergehenden Ansprüche,
dadurch gekennzeichnet,
daß an zwei gegenüberliegenden Randbereichen der Deckwand (11), vorzugsweise oben und unten jeweils ein Scharnier (15) vorgesehen ist und die auf diese Weise gebildeten beiden Klappen (12, 13) durch zwischen ihnen verlaufende Perforationen (14) getrennt sind.

10. Airbagmodul-Abdeckkappe nach einem der vorhergehenden Ansprüche,
dadurch gekennzeichnet,
daß die Kanten der Nuten (20, 20') am Übergang zur Außenfläche der Deckwand (11) abgerundet sind.

11. Airbagmodul-Abdeckkappe nach einem der vorhergehenden Ansprüche,
dadurch gekennzeichnet,
daß die Perforationen (14) an ihren in bzw. entgegen der Reißrichtung liegenden Enden spitz zulaufen.

12. Airbagmodul-Abdeckkappe nach Anspruch 11,
dadurch gekennzeichnet,
daß die Perforationen (14) in Draufsicht trapez- oder dreieckförmig ausgebildet sind.

13. Airbagmodul-Abdeckkappe nach Anspruch 11 oder 12,
dadurch gekennzeichnet,
daß die längere Begrenzungsseite (14') der Perforationen (14) auf der von der Klappe (12, 13) abgewandten Seite, d.h. bezogen auf die Klappe (12, 13) außen liegt.

14. Airbagmodul-Abdeckkappe nach einem der vorhergehenden Ansprüche,
dadurch gekennzeichnet,
daß sich zwischen dem Scharnier (15) bzw. den Scharnieren (15) und der angrenzenden Perforation (14) eine Reißbarriere (23, 26) befindet.

15. Airbagmodul-Abdeckkappe nach Anspruch 14,
dadurch gekennzeichnet,
daß die Reißbarriere in einer zwischen dem Scharnier (15) und der bzw. den benachbarten Perforationen (14) vorgesehenen Materialanhäufung (23) besteht.

16. Airbagmodul-Abdeckkappe nach Anspruch 14,
dadurch gekennzeichnet,
daß die Reißbarriere in einem Abstand (26) zwischen den Enden des Scharniers (15) und der einen deutlichen Winkel mit dem Scharnier (15) einschließenden, entlang der Perforation (14) verlaufenden Reißlinie besteht.

17. Airbagmodul-Abdeckkappe nach einem der vorhergehenden Ansprüche,
dadurch gekennzeichnet,
daß das Material des Kunststoffüberzuges (19) sich zumindest weitgehend vollständig in die Nuten (20, 20') und die Perforationen (14) erstreckt.

18. Verfahren zur Herstellung einer Airbagmodul-Abdeckkappe nach einem der vorhergehenden Ansprüche,
dadurch gekennzeichnet,
daß die Nuten (20, 20') und die Perforation (14) durch ein von der Außenfläche der Deckwand (11) her eingreifendes Außenwerkzeug (21), welches die Perforationsvorsprünge (22) trägt, und ein von innen gegengehaltenes Innenwerkzeug (27) geformt werden.

19. Verfahren nach Anspruch 18,
dadurch gekennzeichnet,
daß auf die so vorbereitete Deckwand (11) und die Seitenwände (24) der Kunststoffüberzug (19) derart aufgebracht wird, daß er sich auch in den Nuten (20, 20') und den Perforationen (14) befindet.

## Claims

1. Airbag module cover cap having sidewalls (24) and a cover wall (11) in which at least one flap (12, 13) is provided, which is delimited by line-shaped perforations (14) from the remainder of the cover wall (11) or from another flap (13, 12), and which, on triggering of the generator (17) of the airbag module (18) and the tearing of the perforations (14) which is caused thereby, can pivot outwardly about a hinge (15) which is formed preferably by thinning of a material to allow the gas bag (18) of the airbag module (16) to pass through outwardly, with the cover wall (11) and preferably also the sidewalls (24) being provided with a plastic coating (19) preferably serving decorative purposes and preferably having a softer material than the sidewalls (24) and the cover wall (11), characterised in that the perforations (14) are located at the base of continuous grooves (20, 20'), which are provided at the outer side of the cover wall (11) and which extend parallel to and in alignment with the perforations (14) and are at least substantially filled out by the material of the plastic coating (19).

2. Airbag module cover cap in accordance with claim 1, characterised in that the grooves (20, 20') taper towards the perforations (14) and the tapering preferably continues in the perforations (14).

3. Airbag module cover cap in accordance with claim 2, characterised in that the angle of tapering is 5 to 15° and in particular approximately 10°.

4. Airbag module cover cap in accordance with any one of the preceding claims, characterised in that the depth of the grooves (20, 20') is greater than the depth of the perforations (14).

5. Airbag module cover cap in accordance with any one of the preceding claims, characterised in that the depth of the perforations (14) is 0.4 to 0.8 mm, in particular approximately 0.6 mm.

6. Airbag module cover cap in accordance with any one of the preceding claims, characterised in that the depth of the grooves (20, 20') is 1 to 3 mm and in particular approximately 2 mm.

7. Airbag module cover cap in accordance with any one of the preceding claims, characterised in that the depth of the grooves (20, 20') is 2 to 10 times, and in particular approximately 5 times, the depth of the perforations (14).

8. Airbag module cover cap in accordance with any one of the preceding claims, characterised in that the width of the grooves (20, 20') is 1 to 2 mm at the top of the grooves (20, 20'), in particular approximately 1.5 mm.

9. Airbag module cover cap in accordance with any one of the preceding claims, characterised in that a hinge (15) is provided at each of two oppositely disposed marginal regions of the cover wall (11), preferably at the top and bottom respectively, and in that the two flaps (12, 13) which are formed in this manner are separated by perforations (14) extending between them.

10. Airbag module cover cap in accordance with any one of the preceding claims, characterised in that the edges of the grooves (20, 20') are rounded at the transition to the outer surface of the cover wall (11).

11. Airbag module cover cap in accordance with any one of the preceding claims, characterised in that the perforations (14) converge to a point at their ends, lying in or opposite to the direction of tearing.

12. Airbag module cover cap in accordance with claim 11, characterised in that the perforations (14) are trapezoidal or triangular in shape as seen in plan-view.

13. Airbag module cover cap in accordance with claim 11 or claim 12, characterised in that a longer boundary side of the perforations (14) lies at a side remote from the flap (12, 13), i.e. is at the outside with respect to the flap (12, 13).

14. Airbag module cover cap in accordance with any one of the preceding claims, characterised in that a tear barrier (23, 26) is located between the hinge (15) or hinges (15) and the adjoining perforation (14).

15. Airbag module cover cap in accordance with claim 14, characterised in that the tear barrier includes an accumulation of material (23) provided between the hinge (15) and the neighbouring perforation (14) or perforations (14).

16. Airbag module cover cap in accordance with claim 14, characterised in that the tear barrier includes a spacing (25) between the ends of the hinge (15) and the tear line which extends along the perforation (14) and includes a substantial angle with the hinge (15).

17. Airbag module cover cap in accordance with any one of the preceding claims, characterised in that the material of the plastic coating (19) extends at least fully into the grooves (20, 20') and into the perforations (14).

18. Method of manufacturing an airbag module cover cap in accordance with any one of the preceding claims, characterised in that the grooves (20, 20') and the perforations (14) are formed by an outer tool (21) which acts from the outer surface of the cover wall (11) and carries the perforation projections (22) and by an inner tool (27) which is held from the inside.

19. Method in accordance with claim 18, characterised in that the plastic coating (19) is applied to the so prepared cover wall (11) and the sidewalls (24) such that it is also located in the grooves (20, 20') and the perforations (14).

## Revendications

1. Capuchon de couverture pour module de coussin d'air dit "airbag", comprenant des parois latérales (24) et une paroi de couverture (11), dans laquelle est prévu au moins un volet (12, 13), lequel est délimité du reste de la paroi de couverture (11) ou d'un autre volet (13, 12) au moyen de perforations (14) ménagées sous forme de lignes, et capable de pivoter vers l'extérieur, lors de l'allumage du générateur (17) du module d'airbag (16) et de l'arrachement ainsi provoqué des perforations (14), autour d'une charnière (15) formée de préférence par amincissement du matériau, afin de permettre au sac à gaz (18) du module d'airbag (16) de sortir vers l'extérieur, dans lequel la paroi de couverture (11) et de préférence également les parois latérales (24) sont dotées d'un revêtement de matière plastique (19) servant de préférence à des fins décoratives, ledit revêtement étant de préférence réalisé en un matériau quelque peu plus souple que celui des parois latérales (24) et de la paroi de couverture (11),
caractérisé en ce que les perforations (14) sont prévues au fond de rainures (20, 20') continues prévues sur la face extérieure de la paroi de couverture (11), lesdites rainures s'étendant parallèlement auxdites perforations (14) et en alignement avec celles-ci, et étant au moins largement remplies avec le matériau du revêtement en matière plastique (19).

2. Capuchon de couverture pour module d'airbag selon la revendication 1,
caractérisé en ce que les rainures (20, 20') vont en se rétrécissant vers les perforations (14), et en ce que ce rétrécissement se poursuit de préférence dans les perforations (14).

3. Capuchon de couverture pour module d'airbag selon la revendication 2,
caractérisé en ce que l'angle de rétrécissement est compris entre 5 et 15°, et s'élève en particulier à approximativement 10°.

4. Capuchon de couverture pour module d'airbag selon l'une des revendications précédentes,
caractérisé en ce que la profondeur des rainures (20, 20') est supérieure à la profondeur des perforations (14).

5. Capuchon de couverture pour module d'airbag selon l'une des revendications précédentes,
caractérisé en ce que la profondeur des perforations (14) est comprise entre 0,4 et 0,8 mm, et s'élève en particulier à approximativement 0,6 mm.

6. Capuchon de couverture pour module d'airbag selon l'une des revendications précédentes,
caractérisé en ce que la profondeur des rainures (20, 20') est comprise entre 1 et 3 mm, et s'élève en particulier à approximativement 2 mm.

7. Capuchon de couverture pour module d'airbag selon l'une des revendications précédentes,
caractérisé en ce que la profondeur des rainures (20, 20') est comprise entre deux et dix fois, et s'élève en particulier à approximativement cinq fois la profondeur des perforations (14).

8. Capuchon de couverture pour module d'airbag selon l'une des revendications précédentes,
caractérisé en ce que la largeur des rainures (20, 20') en haut est comprise entre 1 et 2 mm, et s'élève en particulier à approximativement 1,5 mm.

9. Capuchon de couverture pour module d'airbag selon l'une des revendications précédentes,
caractérisé en ce qu'il est prévu une charnière respective (15) au niveau de régions de bordures opposées de la paroi de couverture (11), de préférence en haut et en bas, et en ce que les deux volets (12, 13) formés de cette manière sont séparés par des perforations (14) qui s'étendent entre eux.

10. Capuchon de couverture pour module d'airbag selon l'une des revendications précédentes,
caractérisé en ce que les arêtes des rainures (20, 20') sont arrondies au niveau de la transition vers la surface extérieure de la paroi de couverture (11).

11. Capuchon de couverture pour module d'airbag selon l'une des revendications précédentes,
caractérisé en ce que les perforations (14) convergent en forme de pointe à leurs extrémités disposées dans la direction d'arrachement, ou respectivement en direction opposée.

12. Capuchon de couverture pour module d'airbag selon la revendication 11,
caractérisé en ce que les perforations (14) sont réalisées en forme de trapèze ou de triangle en vue de dessus.

13. Capuchon de couverture pour module d'airbag selon l'une ou l'autre des revendications 11 et 12,
caractérisé en ce que le côté de limitation allongé (14') des perforations (14) est disposé du côté détourné du volet (12, 13), c'est-à-dire à l'extérieur en se rapportant au volet (12, 13).

14. Capuchon de couverture pour module d'airbag selon l'une des revendications précédentes,
caractérisé en ce qu'il est prévu une barrière anti-arrachement (23, 26) entre la charnière (15), ou respectivement les charnières (15), et la perforation adjacente (14).

15. Capuchon de couverture pour module d'airbag selon la revendication 14,
caractérisé en ce que la barrière anti-arrachement est formée par une accumulation de matériau (23) prévue entre la charnière (15) et la ou les perforations voisines (14).

16. Capuchon de couverture pour module d'airbag selon la revendication 14,
caractérisé en ce que la barrière anti-arrachement est formée par une distance (26) entre les extrémités de la charnière (15) et la ligne d'arrachement qui s'étend le long des perforations (14) et qui forme un angle important avec la charnière (15).

17. Capuchon de couverture pour module d'airbag selon l'une des revendications précédentes,
caractérisé en ce que le matériau du revêtement en matière plastique (19) s'étend au moins largement complètement jusque dans les rainures (20, 20') et les perforations (14).

18. Procédé pour la réalisation d'un capuchon de fermeture pour module d'airbag selon l'une des revendications précédentes,
caractérisé en ce que les rainures (20, 20') et les perforations (14) sont formées au moyen d'un outil extérieur (21), qui attaque depuis la face extérieure de la paroi de couverture (11) et qui porte les saillies de perforation (22), et d'un outil intérieur (27) retenu de l'intérieur.

19. Procédé selon la revendication 18,
caractérisé en ce que le revêtement en matière plastique (19) est appliqué sur la paroi de couverture (11) et sur les parois latérales (24) ainsi préparées, de telle façon qu'il se trouve également dans les rainures (20, 20') et dans les perforations (14).
